# EUROPÄISCHE PATENTSCHRIFT

(11) **EP 2 439 395 B1**
(45) Veröffentlichungstag und Bekanntmachung des Hinweises auf die Patenterteilung: **09.05.2018**
(21) Anmeldenummer: 11006048.0
(22) Anmeldetag: 23.07.2011
(51) Int. Cl.: F02K 9/34, B63G 8/22, B63G 8/24, C06D 5/08, F02K 9/50

(54) **Vorrichtung zum Bedrücken eines Auftriebstanks**
Device for pressurising a lift tank
Dispositif de mise sous pression d'un réservoir de portance

(30) Priorität: 06.10.2010 DE 102010047677
(43) Veröffentlichungstag der Anmeldung: 11.04.2012
(73) Patentinhaber: Bayern-Chemie Gesellschaft für flugchemische Antriebe mbH, 84544 Aschau am Inn (DE)
(72) Erfinder: Naumann, Karl Wieland, 84453 Mühldorf (DE); Stierle, Ralf, 83533 Erding (DE); Ramsel, Jürgen, 84559 Kraiburg (DE); Schmid, Konrad, 93161 Sinzing (DE)
(74) Vertreter: LS-MP von Puttkamer Berngruber Loth Spuhler

(56) Entgegenhaltungen:
- EP-A2- 2 136 064
- DE-A1- 4 338 340
- DE-C1- 10 250 557
- US-A- 3 710 573
- US-A- 3 716 009
- US-A- 5 129 348

## Beschreibung

Die Erfindung betrifft eine Vorrichtung zum Bedrücken eines Auftriebstanks, aufweisend einen Auftriebstank und einen Gasgenerator.

Aus dem Stand der Technik sind Vorrichtungen bekannt, bei welchen ein mit Gas gefüllter Behälter den Auftrieb liefert, um gegebenenfalls auch große Lasten kontrolliert und gegebenenfalls mit geringeren Sinkgeschwindigkeit in große Wassertiefen abzusenken oder zu heben. Im Absenken darf hierbei die Gasmasse nicht konstant bleiben, weil wegen des zunehmenden Drucks das Volumen abnimmt, sodass die Sinkgeschwindigkeit mit zunehmender Tauchtiefe zunimmt. Umgekehrt dehnt sich das Gas beim Auftauchen aus, dass die Auftauchgeschwindigkeit bei abnehmender Tauchtiefe erhöht. Während das Gasvolumen beim Auftauchen, leicht durch Ablassen von Gas angepasst werden kann, muss beim Absenken kontinuierlich oder intermittierend Gas zugeführt werden, um der außendruckbedingten Abnahme des Volumens, und entsprechend der Zunahme der Absenkgeschwindigkeit entgegenzuwirken. Die Gaszufuhr erfolgt bei den aus dem Stand der Technik bekannten Vorrichtungen aus Druckgasreservoirs oder mittels Gasgeneratoren.

Die US-Patentschrift US 3,716,009 offenbart einen Tauchtank, der durch Hydrazin, das in dem Gasgenerator zu Stickstoff und Wasserstoff zerfällt, bedrückt wird.

Aus der deutschen Patentschrift DE 102 50 557 C1 geht ein Gasgenerator zur Auftriebserzeugung hervor, der ebenfalls mit Hydrazin in einer bladder betrieben wird, wobei die bladder mit einer Pulverkartusche unter Druck gesetzt wird.

Die Offenlegungsschrift DE 43 38 340 offenbart eine Vorrichtung zur Auftriebserzeugung im Bereich von Unterwasserfahrzeugen. Die Vorrichtung umfasst eine Gaserzeugungsanlage sowie einen von dieser bespeisten Ballasttank. Weiter ist eine Reaktionskammer zur Verbrennung eines Ammoniak-Sauerstoff-Gemisches vorgesehen.

Aus der EP 2 136 064 A2 ist ein Gasgenerator bekannt, der eine Brennkammer aufweist, der ein fliessfähiger, anzündfähiger Treibstoff zugeführt wird. Damit der anzündfähige Treibstoff verbrennt, muss in der Brennkammer ein Mindestdruck aufrechterhalten werden. Hierzu ist eine Einrichtung zur Regelung des Querschnitts einer Auslassöffnung vorgesehen.

Die aus dem Stand der Technik bekannten Feststoff-Gasgeneratoren weisen den Nachteil auf, dass der Treibstoff ein Explosivstoff ist, der generell und insbesondere bei Transport und Handhabung spezifischen Vorschriften unterliegt, die die freizügige Verwendung behindern. Bekannte Gasgeneratoren, die z.B. Hydrazin oder Hydrazinderivate verbrennen, weisen den Nachteil auf, dass der Treibstoff hochentzündlich, sehr giftig und krebserregend ist. Diese Treibstoffe unterliegen deshalb ebenfalls bei Transport und Handhabung spezifischen Vorschriften, die insbesondere bei großen Mengen auch von Umweltschutzaspekten getrieben werden. Aus dem Stand der Technik bekannten Vorrichtungen, die Gasdruckreservoirs einsetzen, sind insbesondere bei großen Tauchtiefen sehr hohe Druckniveaus im Tauchtank erforderlich. Entsprechend muss ein sehr großes Gasreservoir mitgeführt werden, das bei geringer Tauchtiefe oder an einer Wasseroberfläche einem enormen Überdruck standhalten muss.

Insbesondere schwere Lasten werden aus den genannten Nachteilen mittels schiffsgestützten Kränen abgesenkt bzw. gehoben. Beim Einsatz von Kränen ist eine erhebliche Infrastruktur in Form von großen Spezialschiffen erforderlich.

Vor diesem Hintergrund liegt der Erfindung die Aufgabe zugrunde, eine Vorrichtung zum Bedrücken eines Auftriebstanks anzugeben, die die beschriebenen Nachteile vermeidet.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Die Aufgabe ist bei einer Vorrichtung zum Bedrücken eines Auftriebstanks mit den Merkmalen des Anspruchs 1 gelöst, die unter anderem einen Gasgenerator aufweist. Der Gasgenerator ist durch Verbrennung eines Treibstoffs betreibbar. Die bei der Verbrennung zuzuführende Menge an Treibstoff ist von dem Druck abhängig, der in dem Auftriebstank vorliegt und einem bestimmten auszugleichenden Volumeninkrement abhängig.

Bei einem sehr hohen Gegendruck auf der Seite des Auftriebstanks ist entweder ein sehr hoher Brennkammerdruck erforderlich, oder die die Brennkammer verlassene Strömung erreicht im engsten Auslassquerschnitt nicht die Schallgeschwindigkeit. In letzterem Fall kann der Gasgenerator auf geringerem Druckniveau arbeiten, wobei jedoch Maßnahmen getroffen werden müssen, die schädliche Kopplungen und Druckschwankungen zwischen der Brennkammer des Gasgenerators und dem Auftriebstank unterdrücken.

Eine bevorzugte Ausführungsform der Vorrichtung ist dadurch gekennzeichnet, dass die Einstellung der zuzuführenden Menge an Treibstoff über die Einstellung des Förderdrucks im Treibstofftank erfolgt. Ebenso kann der Treibstoffstrom mittels eines Ventils eingestellt oder geregelt werden.

Bevorzugt im Inneren des Treibstofftanks ist ein Teil des Treibstoffs enthalten. Auf den Treibstoff wird von einem Medium eine Kraft ausgeübt. Durch den auf die Membran einwirkenden Druck des Mediums wird der Treibstoff aus dem Treibstofftank zum Gasgenerator gefördert.

Der Treibstoff in dem Treibstofftank ist vorzugsweise von einer Membran oder über eine Blase von dem Medium getrennt. Die Membran oder die Blase ist vorzugsweise fest mit dem Treibstofftank verbunden.

In einer weiteren bevorzugten Ausführungsform der Vorrichtung ist mindestens ein Teil des Treibstoffs in einer Kartusche angeordnet. Die Kartusche ist in einer bevorzugten Ausführungsform innerhalb des Treibstofftanks angeordnet. Bei der Verwendung einer Kartusche kann jedoch auch auf den Treibstofftank verzichtet werden, wobei die Vorrichtung hierbei derart ausgebildet ist, dass das Medium direkt auf die Kartusche Druck ausübt.

Die Kartusche ist vorzugsweise austauschbar ausgebildet. Durch eine austauschbare Kartusche kann diese auch als Transportbehälter für den Treibstoff eingesetzt werden. Die Kartusche wird dann im Zuge der Einsatzvorbereitungen in die Vorrichtung eingesetzt. Auf die Kartusche wird durch das Medium ein Druck ausgeübt.

Bei einer mit dem Tank fest verbundenen Membran oder Blase kann die Gelkammer beispielsweise aus einem Vorratsbehälter betankt werden. Auch bei der Betankung der Vorrichtung mit Treibstoff kann für die Bedrückung des Speisetanks anstelle der Bedrückung Mittels Luft oder Feststoffgeneratorgas auf eine Bedrückung mittels Wasser zurückgegriffen werden.

Bei der Tankbedrückung mittels Druckwasser kann, da diese sehr präzise durchgeführt werden kann, auf ein Regelventil zur Gel-Durchflussregelung verzichtet werden. Dies gilt auch bei der Gel-Förderung mittels z.B. Kolben- oder Membranpumpen.

Die Bedrückung des Tanks während des Einsatzes kann z.B. durch eine Pumpe erfolgen, die beispielsweise Außenwasser ansaugt.

Alternativ kann hierzu auch das Wasser aus einem zusätzlichen Tank mit Speisewasser verwendet werden.

Erfindungsgemäß ist der Auslassquerschnitt des Gasgenerators von dem in dem Auftriebstank vorherrschenden Druck abhängig einstellbar.

Eine weitere Ausführungsform der Vorrichtung ist dadurch gekennzeichnet, dass der Gasgenerator ein Einstoff- oder ein Zweistoff-Gasgenerator ist. Als mögliche Treibstoffe für den Gasgenerator werden bevorzugt gelartige Treibstoffe oder auch flüssiger Treibstoffe oder ein Treibstoffschlamm verwendet.

Eine weitere Ausführungsform der Vorrichtung ist dadurch gekennzeichnet, dass entweder der Brennstoff oder der Oxidator in Form eines oder mehrerer Feststoffblöcke in einer Brennkammer angeordnet sind, in die dann flüssiger oder gasförmiger Oxidator oder Brennstoff eingespritzt werden. Der flüssige oder gasförmige Oxidator oder Brennstoff reagieren dann an der Oberfläche des festen Treibstoffs oder Oxidators mit diesem und bilden Gase.

Vorzugsweise ist die Vorrichtung derart ausgebildet, dass der Gasgenerator einen Expansionsmotor antreibt. Der Expansionsmotor treibt einen elektrischen Generator, wie beispielsweise eine Turbine antreibt. Über die Turbine wird eine Pumpe angetrieben. Vorzugsweise erzeugt der elektrische Generator hierzu elektrischen Strom, der zum Antrieb der Pumpe eingesetzt wird.

Eine weitere Ausführungsform der Vorrichtung ist dadurch gekennzeichnet, dass der Gasgenerator einen Expansionsmotor antreibt. Der Expansionsmotor treibt einen Generator zur Erzeugung von elektrischem Strom an.

Der erzeugte Strom kann auch für weitere Nutzer, wie z.B. Ventiltrieb, Messeinrichtungen, Steuerungen, Datenübertragung oder Antriebe zur Positionierung oder Fortbewegung der Vorrichtung zur Verfügung gehalten werden. Hierzu kann beispielsweise ein Akkumulator als Zwischenspeicher dienen. Über die Pumpe wird das Medium in den Treibstofftank gepresst. Während der Treibstofftank beim Abstieg zunehmend bedrückt werden muss, muss das Druckniveau beim Aufstieg vermindert werden. Dies kann beispielsweise durch ein Ventil erfolgen.

In einer bevorzugten Ausführungsform der Vorrichtung handelt es sich bei dem Medium um Wasser. Das Wasser stammt entweder aus der Umgebung der Vorrichtung, so beispielsweise beim Einsatz der Vorrichtung im Wasser. Alternativ kann das Wasser bzw. einen alternatives Medium über separate Vorratsbehälter zur Verfügung gestellt werden.

Erfindungsgemäß ist der Auslass des Gasgenerators mit einem Einlass des Auftriebstanks verbunden. Als Auslass ist hierbei die Gasaustrittsöffnung des Gasgenerators zu verstehen.

In einer bevorzugten Ausführungsform der Vorrichtung ist der Gasgenerator wiederanzündbar. Durch die Ausführung als wiederanzündbarer Gasgenerator kann dieser auf Anfrage zeitweilig in Betrieb genommen werden und nach einer gewissen Zeit ausgeschaltet werden. Für eine erneute Anfrage steht der Gasgenerator dann jederzeit wieder zur Verfügung. Das Anzünden des Gasgenerators geschieht bevorzugt mittels eines Gasanzünders, der z.B. ein Brenngas und Luft verbrennt und auch ein wiederholtes Anzünden des Gasgenerators ermöglicht. Vorzugsweise werden die Gase hierzu in Hochdruckflaschen mitgeführt. Bei extremen Tauchtiefe kann es auch sinnvoll sein, Flaschen mit einer Membran zu verwenden, deren eine Kammer ähnlich dem Treibstofftank entsprechend der Tauchtiefe und dem Druckniveau im Auftriebstank mit Wasser bedrückt wird.

Der Anzünder verbrennt in einer bevorzugten Ausführungsform des Gasgenerators bevorzugt Gas und/oder mindestens einen festen Treibstoff.

Eine weitere bevorzugte Ausführungsform für die Anzündung besteht in der Nutzung eines oder, falls wiederholt angezündet werden soll, mehrere pyrotechnischer Anzünder, die bevorzugt festen Treibstoff verbrennen.

Eine weitere bevorzugte Ausführungsform verwendet einen festen Treibstoff- oder Oxidatorblock, dessen Oberfläche mit flüssigem oder gasförmigen Oxidator oder Treibstoff derart benetzt wird, dass eine spontane Reaktion von Treibstoff und Oxidator Gase erzeugt, die ihrerseits den Gasgenerator-Treibstoff anzünden. Diese Reaktion kann gegebenenfalls durch eine gegebenenfalls klein ausgebildete Zündeinrichtung in Gang gesetzt oder beschleunigt werden.

Eine besonders bevorzugte Ausführungsform der Vorrichtung ist dadurch gekennzeichnet, dass das aus dem Gasgenerator ausströmende Gas durch einen Injektor mit einem nachgeschaltetem Diffusor geleitet wird. In dem Diffusor wird das Gas aus dem Gasgenerator zusammen mit Gas aus dem Auftriebstank vermischt.

Die Vorrichtung ist derart ausgebildet, dass im Bereich des Diffusors die brennbaren Anteile des Gases aus dem Gasgenerator, vorzugsweise zusammen mit dem Oxidatoranteil des Gases aus dem Auftriebstank verbrennbar sind.
Bei der Verbrennung flüssiger oder fester Treibstoffe entsteht in der Regel ein Gasgemisch gegebenenfalls auch Partikel. Einige der bevorzugten Verbrennungsprodukte sind Wasser und Kohlendioxid. Wasser kondensiert bei den in Gewässern üblichen Temperaturen. Hinzukommt eine starke Erhöhung des Drucks, so dass auch im Auftriebstank das Wasser zumeist als Flüssigkeit vorkommen kann. Ähnlich wird auch Kohlendioxid bei hohem Druck flüssig. Gasförmig bleiben auch bei hohem Druck Verbrennungsprodukte wie z.B. Wasserstoff, Kohlenmonoxid oder Stickstoff. Somit eignet sich für den Betrieb des Gasgenerators vorzugsweise Treibstoffe/Oxidatoren, die möglichst wenig Wasser und Kohlendioxid erzeugen. Kondensate, die sich im Auftriebstank sammeln, können mittels eines Ventils in die Umgebung abgelassen werden, falls im Auftriebstank etwas Überdruck herrscht und falls die Kondensate nicht umweltschädlich sind.

Weil die nicht kondensierenden Reaktionsprodukte, insbesondere Wasserstoff und Kohlenmonoxid, brennbar sind, sollte in dem Auftriebstank kein als Oxidator taugliches Gas in einer Konzentration vorhanden sein, die reaktionsfähig ist.

Eine mögliche Maßnahme zur Verhinderung einer Reaktion im Auftriebstank ist, diesen zu Beginn eines Einsatzes zu evakuieren und dann mit Stickstoff zu füllen. In der Folge bleibt die Zuführung brennbarer Gase unkritisch.

Das Ablassen der brennbaren Gase während des Aufstiegs ist ebenfalls unkritisch und nach dem Einsatz muss lediglich darauf geachtet werden, dass Umgebungsluft nicht in den Auftriebstank einströmt.

Eine weitere bevorzugte Maßnahmen zur Verhinderung einer Reaktion im Auftriebstank mit vorhandenen Oxidatoren besteht darin, die den Gasgenerator verlassenden Gase in einem Injektor mit nachfolgendem Diffusor sich mit angesaugtem Gas aus dem Auftriebstank zu mischen. Die Mischung erfolgt derart, dass die brennbaren Anteile des Gases aus dem Gasgenerator mit eventuell vorhandenem Oxidator im Diffusor kontrolliert verbrannt werden.

Als weitere Möglichkeit zur Erzeugung eines weitgehend Wasserstoff-freien Gases kann beispielsweise dem Gel-Treibstoff etwas Oxidator, beispielsweise in Form von Partikeln, löslichen Feststoffen oder mischbaren Flüssigkeiten, zugesetzt werden. Derartige Treibstoffe sind jedoch sensitiver und reaktionsfreudiger, gegebenenfalls auch weniger umweltverträglich. Eine zu bevorzugende Alternative besteht in der Verwendung von Zweistoffsystemen, bei welchen der Oxidator vergleichsweise frei gewählt werden kann. Hierbei treten wesentlich weniger Verträglichkeitsprobleme auf. In Frage kommen z.B. Wasserstoffperoxid, das bei Umgebungstemperatur flüssig ist, oder Stickstoffmonoxid, dass eine zusätzliche Ausbeute an Stickstoff bietet.

Eine weitere Möglichkeit besteht in der Absorption von Wasserstoff mittels eines geeigneten Speichermaterials, indem z.B. Wasserstoff durch Durchleitung durch Absorptionsschichten gebunden wird. Bei der Bereitstellung der Vorrichtung für den nächsten Einsatz kann der Wasserstoff kontrolliert freigesetzt werden.

Die Vorrichtung ist vorzugsweise derart ausgebildet, dass das aus dem Gasgenerator ausströmende Gas gekühlt wird. Vorzugsweise wird das aus dem Gasgenerator ausströmende Gas entweder durch das Gas aus dem Auftriebstank oder durch das die Vorrichtung umgebende Medium, wie beispielsweise Wasser, gekühlt.

Der Einsatz eines zuvor beschriebene Injektors, der das Gas aus dem Gasgenerator mit dem Auftriebstankgas mischt, weist den Vorteil auf, das die Temperatur und die Strömungsgeschwindigkeit des Gasstrahles durch die Mischung vermindert werden. Dadurch wird die thermische Belastung der durchströmten Rohre und anderer Strukturen vermindert.

Sollte die hierdurch erzielte Temperaturabsenkung nicht ausreichend sein, kann das Gas aus dem Gasgenerator durch einen zusätzlichen Kühler, z.B. in Form eines wasserdurchflossenen Rohrbündels zusätzlich gekühlt werden. Auch der alleinige Einsatz eines Kühlers ohne Injektor oder eine andere Form des Gasmischers es möglich.

Eine weitere Möglichkeit, die Wärme des Gases aus dem Gasgenerator zu nutzen, bietet ein thermoelektrischer Generator, der den Seebeck-Effekt ausnutzt. Der hierbei erzielte Wirkungsgrad ist jedoch gering. Zur Nutzung der Wärmeenergie kann beispielsweise auch ein Sterlingmotor oder eine Kraftmaschine, die nach dem Dampfprozess arbeitet, verwendet werden. Als Dampferzeuger wirken beispielsweise die Kühlungsrohre im Ejektor des Gasgenerators, die Kühlung des Dampfes oder erhitzten Wassers erfolgt beispielsweise durch das Umgebungswasser.

Beim Einsatz von gelförmigen Treibstoff/Oxidatoren muss eine hinreichend hohe Einspritzgeschwindigkeit vorliegen und demzufolge auch mit Einspritzüberdruck in die Brennkammer des Gasgenerators eingespritzt werden. Hierbei ist es einerseits erforderlich, eine gute Zerstäubung und damit auch Verbrennung und andererseits eine weitgehende strömungsmechanische Entkopplung von Brennkammer- und Fördervorgängen sicherzustellen. Die eingesetzten gelförmigen Treibstoffe werden bevorzugt mittels Druck gefördert, jedoch sind, weil der Treibstofftank beispielsweise durch Wasser bedrückt werden kann, auch z.B. Kolben- oder Membranpumpen möglich. Typisch ist z.B. ein Treibstoffandruck, der 50 bis 100 bar über den Brennkammerdruck liegt. Der Brennkammerdruck wiederum ist bevorzugt höher oder mindestens gleich groß, wie der Druck in dem Auftriebstank.

Es ist nicht erforderlich, dass sowohl der Druck im Treibstofftank als auch der Brennkammerdruck einem festen Wert aufweisen, sondern sie können parallel zum Auftriebstankdruck variieren.

Die Regelung des Gasstroms geschieht bevorzugt über aktiv angesteuerte Ventile in den Zuleitungen für den Treibstoff und/oder den Oxidator. Weitere Regelungsmöglichkeiten sind z.B. möglich mittels des Förderdrucks in den Tanks oder einer Volumenänderung des Tanks z.B. durch Bewegung eines Kolbens, oder durch Pumpen, die den Treibstoff fördern.

Eine alternative Ausführung des Gasgenerators besteht darin, den Treibstofftank als Gasgenerator auszubilden und beispielsweise das Gel an der freien Oberfläche in der Art eines Stirnbrenners zu verbrennen. Bei den für diesen Zweck einsetzbaren Gelen ist eine Verbrennung an einer freien Oberfläche grundsätzlich bei einem Druckniveau von über 30 bar möglich. Die Anpassung der Gaserzeugung muss den mit zunehmender Tauchtiefe steigendem Druck berücksichtigen. Dies geschieht z.B. durch eine den gewünschten Abbrand-Profil entsprechende Form des Treibstofftanks. Eine geeignete Form ist z.B. ein auf der Spitze stehender Konus mit bei zunehmendem Abbrand sich verringernder Querschnittsfläche. Hierbei wird die bei steigendem Druck höhere Abbrand-Rate des Treibstoffs durch die sich verkleinernde Abbrand-Oberfläche dahingehend kompensiert, dass eine konstante Menge an Gas je Zeit erzeugt wird. Eine weitere Möglichkeit wäre z.B. ein Treibstofftank mit in Höhe der Verbrennungsfront jeweils lokal variablem Durchmesser oder ein von oben in die Oberfläche des z.B. Gel-Treibstoffes eindringender, verschiebbarer konischer Dorn. Dadurch wäre auch eine aktive Gasstromregelung möglich.

Grundsätzlich ist auch möglich, mehrere der zuvor beschriebenen Gasgeneratoren, gegebenenfalls in verschiedenen Größen zu verwenden. Dadurch ist es beispielsweise mittels parallelem und/oder sequentiellem Betrieb möglich, den Gasmassenstrom noch feiner zu regeln.

Durch die zuvor beschriebene Vorrichtung zum Bedrücken eines Auftriebstanks ist es möglich, auch schwere Lasten mittels einer einfachen Vorrichtung in große Wassertiefen zu senken bzw. zu heben.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist.

Es zeigen:
- Figur 1: schematisch den Aufbau einer erfindungsgemäßen Vorrichtung,
- Figur 2: eine Ausführung eines Injektors mit Mischdiffusor,
- Figur 3: eine Ausführung eines Injektors mit zusätzlicher Gaskühlung, und
- Figur 4: eine Ausführung des Treibstofftanks mit eingelegter Kartusche.

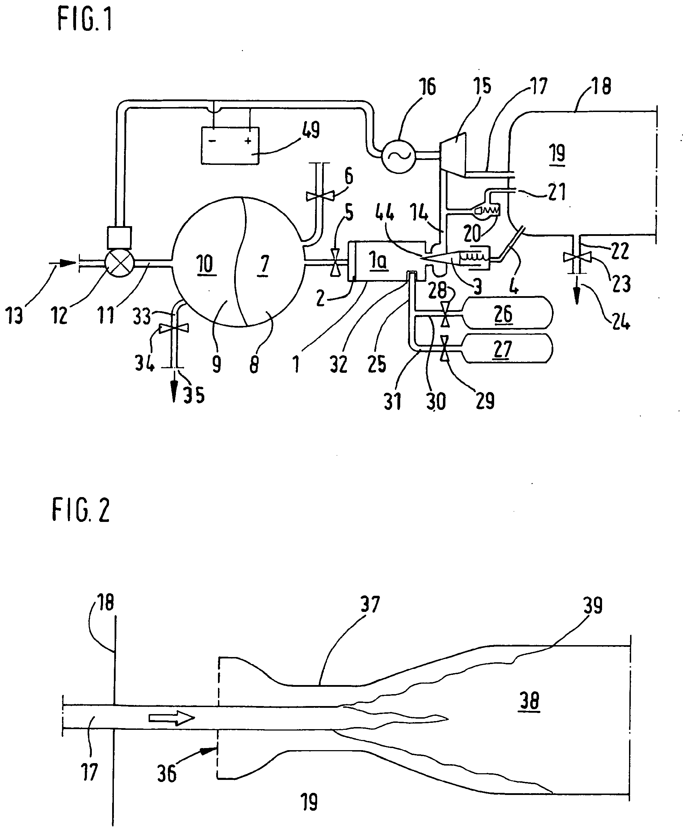

In Figur 1 ist schematisch der Aufbau einer Ausführungsform der erfindungsgemäßen Vorrichtung gezeigt. Die Vorrichtung umfasst einen Gasgenerator 1. Der Gasgenerator 1 umfasst eine Brennkammer 1a sowie einen Injektor 2. Über den Injektor 2 wird der für den Betrieb des Gasgenerators 1 benötigte Treibstoff 7 aus einem Treibstofftank 8 in den Brennraum 1a des Gasgenerators 1 befördert. Bei der Verbrennung des Treibstoffs 8 werden in der Brennkammer 1a des Gasgenerators 1 Brenngase freigesetzt. Diese Brenngase werden in der dargestellten Ausführungsform der Vorrichtung über eine Gasableitung 14 zu einer Turbine 15 geleitet. Die Turbine 15 treibt bei dem Durchleiten der Brenngase einen Generator 16 an, der elektrischen Strom erzeugt. Der elektrische Strom wird für weitere Verbraucher der Vorrichtung in einem Akkumulator 49 zwischengespeichert.

Die Brenngase werden am Ausgang der Turbine 15 über eine Gasableitung 17 in einen Auftriebstank 18 geleitet. Die Brenngase aus dem Gasgenerator 1 dienen hierbei dazu, den Innendruck in dem Auftriebsvolumen 19 zu erhöhen.

Um die Ausströmungsgeschwindigkeit der aus der Austrittsöffnung des Gasgenerators 1 strömenden Brenngase zu regulieren, ist die Austrittsöffnung des Gasgenerators 1 mit einer Auslassquerschnitts-Regelung 3 versehen. Die Auslassquerschnitts-Regelung 3 ändert den Auslassquerschnitt der Austrittsöffnung des Gasgenerators 1 abhängig von dem Innendruck des Auftriebstanks 18. Hierzu ist die Auslassquerschnitts-Regelung 3 über eine Referenzdruckversorgung 4 mit dem Auftriebstank 18 verbunden.

Der für die Verbrennung in dem Gasgenerator 1 benötigte Treibstoff 7 wird über einen Treibstofftank 8 zur Verfügung gestellt. Um die Menge des zu verbrennenden Treibstoffs 7 zu beeinflussen, ist der Treibstoff 7 in dem Treibstofftank 8 mit einer Membran 9 abgetrennt. Auf der dem Treibstoff 7 gegenüberliegenden Seite der Membran 9 befindet sich ein Medium 10, beispielsweise Wasser, das einen bestimmten, einstellbaren Druck auf die Membran 9 ausübt und somit die Menge des in den Gasgenerator 1 geförderten Treibstoffs 7 beeinflusst. Der Druck, mit dem das Medium 10 auf die Membran 9 drückt wird über eine Hochdruckpumpe 12 gesteuert. Die Hochdruckpumpe 12 saugt z.B. Wasser über einen Ansaugleitung 13 aus der Umgebung der Vorrichtung an und presst es in den Bereich des Treibstofftanks 8, der durch die Membran 9 begrenzt ist.

Der für den Antrieb der Hochdruckpumpe 12 erforderliche elektrische Strom, wird über einen Akkumulator 49 zur Verfügung gestellt.

Zur Druckentlastung des mediumseitigen Bereichs 10 des Treibstofftanks 8 weist dieser eine Wasserdruckentlastung auf. Die Wasserdruckentlastung umfasst eine mit dem Treibstofftank 8 verbundene Entlastungsleitung 33, die über ein Entlastungsventil 34 das Medium 10 aus dem Treibstofftank 8 über einen Austritt 35 ablassen kann. Somit kann der Druck in dem Treibstofftank 8 auf der Seite des Mediums 10 gezielt eingestellt bzw. reduziert werden. Dies ist beispielsweise bei der Wiederauffüllung des Treibstoffs 7 in den Treibstofftank 8 nötig. Zur Wiederauffüllung des Treibstoffs 7 in den Treibstofftank 8 weist dieser auf der Seite des Treibstoffs 7 einen Auffüllstutzen auf, der über ein Absperrventil 6 verschließbar ist.

Der in der Vorrichtung eingesetzte Gasgenerator 1 ist wiederanzündbar. Dies hat den Vorteil, dass der Gasgenerator 1 beispielsweise nur für bestimmte Zeitabschnitte angezündet werden kann. Zwischen diesen Zeitabschnitten ist der Gasgenerator 1 aus. Zum wiederanzünden weist der Gasgenerator 1 eine Anzünder 32 auf. Der Anzünder 32 ist mit einer Anzündlanze 25 versehen. Die für die Anzündflamme nötigen Gase - Brenngas und Oxidator - werden über eine Brenngasleitung 30 und über eine Oxidatorgasleitung 31 der Anzündlanze 25 zugeführt. Das Brenngas und der Oxidator stehen über eine Brenngasflasche 26 und eine Oxidatorgasflasche 27 zur Verfügung. Die Menge an Brenngas und Oxidator, die zu der Brennlanze 25 gelangen, werden über ein Brenngasventil 28 und ein Oxidatorventil 29 gesteuert.

Um den Druck in dem Auftriebstank 18 zu regulieren ist dieser mit einer Ableitung 22 versehen. Die Ableitung 22 ist mit einem Ventil 23 versehen, um die Druckreduzierung, beispielsweise beim Absinken der Vorrichtung, zu regulieren. Das aus dem Auftriebstank 18 ausströmende Gas wird über einen Auslass 24 beispielsweise an die Umgebung abgelassen. Dieser Auslass dient auch dem Ablassen von Kondensaten aus dem Tank 18.

In der dargestellten Ausführungsform der Vorrichtung ist der Auftriebstank 18 über einen Bypass mit der Gasableitung 14 aus dem Gasgenerator 1 verbunden. Der Bypass umfasst eine Überströmleitung 21, die die aus oder in den Auftriebstank 18 strömende Menge an Gas über ein Überdruckventil 20 reguliert, und damit sicherstellt, dass die Turbine 15 nicht durch einen übermäßig großen Gasstrom überlastet wird.

In Figur 2 ist eine Ausführung eines Injektors 37 mit Mischdiffusor 39 zur Mischung von Gas aus dem Gasgenerator und Gas aus dem Auftriebstank gezeigt. Bei der Mischung von Gas aus dem Gasgenerator und Gas aus dem Auftriebstank wird das Gas aus dem Gasgenerator gekühlt und eventuell vorhandene Oxidatoranteile im Gas aus dem Gasgenerator können mit dem Gas aus dem Auftriebstank 18 kontrolliert verbrannt werden. Der Injektor 37 ist in Strömungsrichtung des Gases aus der Gasableitung 17 vor dem Diffusor 39 angeordnet. Die in Figur 2 dargestellte Anordnung befindet sich, wenn man die Ausführungsform der Vorrichtung gemäß Figur 1 betrachten würde, in Strömungsrichtung des Gases aus dem Gasgenerator nach der Turbine 15.

Der Bereich des Diffusors 39 zu dem Injektor 37 dient als Mischungszone 38 des Gases aus dem Gasgenerator mit dem Gas aus dem Auftriebstank 18. Der Injektor 37 weist mehrere Zuströmöffnungen 36 auf, über die Gas aus dem Auftriebstank 18 zu der Mischungszone 38 des Diffusors 39 gelangen kann. Die Anordnung aus Injektor 37 und Diffusor 39 ist in der dargestellten Ausführungsform innerhalb des Auftriebsvolumens 19 des Auftriebstanks 18 angeordnet. Es ist jedoch auch möglich, dass wenigstens Teile dieser Anordnung auch außerhalb des Auftriebstanks 18 angeordnet sind.

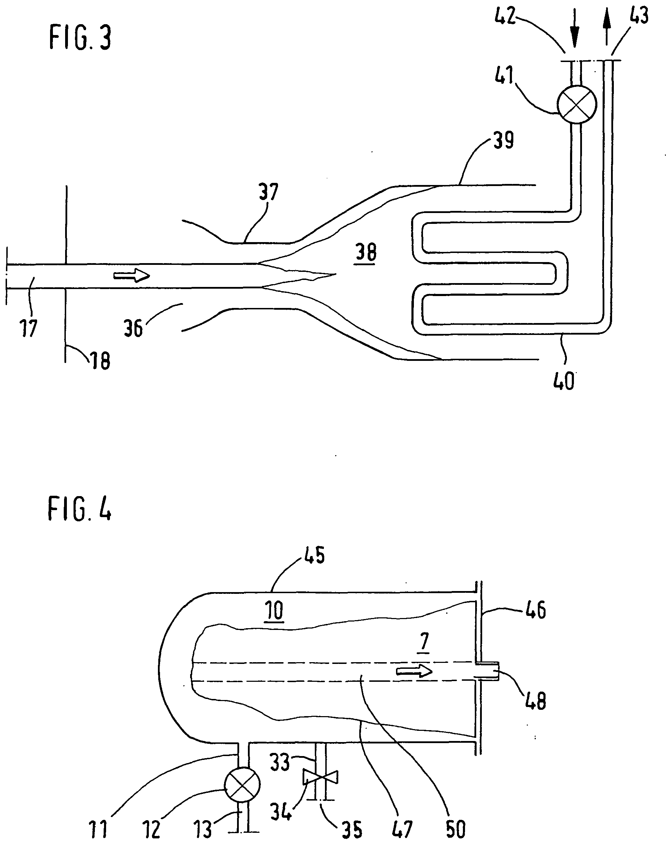

In Figur 3 ist eine weitere Ausführungsform des Injektors 37 dargestellt. Der Injektor 37 ist ähnlich wie in Figur 2 aufgebaut, weist jedoch am Ausgang des Diffusors 39 eine zusätzliche Gaskühlung auf. Die Gaskühlung ist durch flüssigkeitsdurchströmte Kühlrohre 40 gebildet. Durch die Kühlrohre 40 wird beispielsweise Wasser mittels einer Pumpe 41 gefördert. Das Wasser wird über einen Zulauf 42 beispielsweise aus der Umgebung der Vorrichtung entnommen und nach dem Durchlaufen der Kühlrohre 40 wieder über einen Ablauf 43 an die Umgebung zurückgeführt.

Auf die Pumpe 41 kann möglicherweise auch verzichtet werden, wenn die unterschiedliche Dichte von kaltem und warmem Wasser zur Erzeugung einer Strömung ausgenutzt wird.

In Figur 4 ist eine Ausführung des Treibstofftanks mit eingelegter Kartusche 47 gezeigt. Die Kartusche 47 kann auch zusätzlich als Transportgefäß für den Treibstoff/Oxidator dienen. Unter dem Druck des Mediums 10, z.B. Wasser, geben die flexiblen Wände 47 nach, wodurch der Treibstoff 7, z.B. Gel, durch den Auslass 48 ausgefördert wird. Der Druck des Mediums 10 wird über eine Hochdruckpumpe 12 erzeugt, die Wasser aus der Umgebung der Vorrichtung über eine Ansaugleitung 13 ansaugt und über eine Zuleitung 11 in den Treibstofftank presst.

Ein perforiertes Zentralrohr 50 stellt in dieser Ausführungsform sicher, dass das Gel nicht in abgetrennten Taschen der kollabierenden Kartusche 47 eingeschlossen wird und den Auslass 48 nicht mehr erreichen kann. Zum Wiederauffüllen des Treibstofftanks mit Treibstoff 7 ist dieser mit einem Tankdeckel 46 versehen. Um den Druck des Mediums 10 in dem Treibstofftank wieder zu reduzieren weist dieser ein Entlastungsventil 34 auf, über das Medium 10 aus dem Auftriebstank über eine Entlastungsleitung 33 an einen Austritt 35 abgegeben werden kann.

**Bezugszeichenliste**

| | | | |
|---|---|---|---|
| 1 | Gasgenerator | 25 | Anzündlanze |
| 1a | Brennkammer | 26 | Brenngasflasche |
| 2 | Injektor | 27 | Oxidatorgasflasche |
| 3 | Auslassquerschnitts-Regelung | 28 | Brenngasventil |
| | | 29 | Oxidatorventil |
| 4 | Referenzdruckversorgung für 3 | 30 | Brenngasleitung |
| | | 31 | Oxidatorgasleitung |
| 5 | Regelventil | 32 | Anzünder |
| 6 | Absperrventil | 33 | Entlastungsleitung |
| 7 | Treibstoff | 34 | Entlastungsventil |
| 8 | Treibstofftank | 35 | Austritt |
| 9 | Membran | 36 | Zuströmöffnung |
| 10 | Medium | 37 | Injektor |
| 11 | Zuleitung | 38 | Mischungszone |
| 12 | Hochdruckpumpe | 39 | Diffusor |
| 13 | Ansaugleitung | 40 | Kühlwasserrohr |
| 14 | Gasableitung | 41 | Pumpe |
| 15 | Expansionsmotor | 42 | Zulauf |
| 16 | Generator | 43 | Ablauf |
| 17 | Gasableitung | 44 | Auslassquerschnitt |
| 18 | Auftriebstank | 45 | Außenwand |
| 19 | Auftriebsvolumen | 46 | Tankdeckel |
| 20 | Überdruckventil | 47 | Kartusche |
| 21 | Überströmleitung | 48 | Auslass |
| 22 | Ableitung | 49 | Akkumulator |
| 23 | Ventil | 50 | Zentralrohr |
| 24 | Auslass | | |

## Patentansprüche

1. Vorrichtung zum Bedrücken eines Auftriebstanks, aufweisend einen Auftriebstank (18), einen Treibstofftank (8) und einen Gasgenerator (1) mit einer Brennkammer (1a), der durch Verbrennung eines Treibstoffs (7) betreibbar ist,
wobei die Vorrichtung so ausgebildet ist, dass die bei der Verbrennung zuzuführende Menge an Treibstoff (7) von dem Druck, der in dem Auftriebstank (18) variierbar ist, und dem auszugleichenden Volumeninkrement abhängig einstellbar ist,
dass die zuzuführende Menge an Treibstoff (7) über den Treibstofftank (8) einstellbar ist, und
dass in dem Treibstofftank (8) ein Teil des Treibstoffs (7) anordenbar ist, auf den von einem Medium (10) eine Kraft ausübbar ist, und
dass der Druck in der Brennkammer (1a) des Gasgenerators (1) höher oder wenigstens gleich dem Druck in dem Auftriebstank (18) einstellbar ist und
wobei die Vorrichtung **dadurch gekennzeichnet ist, dass** sie weiter so ausgebildet ist,
dass sie eine Turbine (15), eine Gasableitung (14), eine Gasableitung (17) und einen Bypass mit einer Überströmleitung (21) und einem Überdruckventil (20) dergestalt aufweist,
dass die bei der Verbrennung des Treibstoffs (7) in der Brennkammer (1a) des Gasgenerators (1) freigesetzten Brenngase über die Gasableitung (14) zu der Turbine (15) geleitet werden,
dass der Gasgenerator (1) eine Gasaustrittsöffnung als Auslass aufweist und der Auslass des Gasgenerators mit einem Einlass des Auftriebstanks (18) über die Turbine verbunden ist, so dass die Brenngase am Ausgang der Turbine (15) über die Gasableitung (17) in den Auftriebstank (18)geleitet werden,
dass die Gasaustrittsöffnung des Gasgenerators (1) mit einer Auslassquerschnitts-Regelung (3) versehen ist,
dass der Auslassquerschnitt des Gasgenerators (1) von dem in dem Auftriebstank (18) vorherrschenden Druck abhängig einstellbar ist,
dass die Auslassquerschnitts-Regelung (3) über eine Referenzdruckversorgung (4) mit dem Auftriebstank (18) verbunden ist, und
dass der Auftriebstank (18) über einen Bypass mit der Gasableitung (14) aus dem Gasgenerator (1) verbunden ist und dass der Bypass die Überströmleitung (21) umfasst, die ausgestaltet ist, die aus oder in den Auftriebstank (18) strömende Menge an Gas über das Überdruckventil (20)zu regulieren.

2. Vorrichtung nach Anspruch 1,
bei der die Einstellung der zuzuführenden Menge an Treibstoff (7) über einen Treibstofftank (8) erfolgt.

3. Vorrichtung nach Anspruch 2,
bei der der Treibstoff (7) von einer Membran (9)oder über eine Blase von dem Medium (10) getrennt ist.

4. Vorrichtung nach Anspruch 1 und 2,
bei der sich ein Teil des Treibstoffs (7) in einer austauschbaren Kartusche (47) befindet, auf die das Medium (10) einen Druck ausübt.

5. Vorrichtung nach einem der vorhergehenden Ansprüche,
bei der der Gasgenerator (1) ein Einstoff- oder ein Zweistoff-Gasgenerator ist.

6. Vorrichtung nach einem der vorhergehenden Ansprüche,
wobei der Treibstoff (7) entweder ein gelartiger Treibstoff, ein flüssiger Treibstoff oder ein Treibstoffschlamm ist.

7. Vorrichtung nach einem der Ansprüche 1 bis 6,
bei der entweder der Brennstoff oder der Oxidator in Form eines oder mehrerer Feststoffblöcke in einer Brennkammer angeordnet sind, in die ein flüssiger oder gasförmiger Oxidator oder Brennstoff zur Reaktion mit dem festen Treibstoff oder Oxidator an der Oberfläche und zur Gasbildung einspritzbar ist.

8. Vorrichtung nach einem der Ansprüche 1 bis 7,
bei der der Gasgenerator einen Expansionsmotor und dieser einen Generator zur Erzeugung elektrischen Stroms antreibt, mit dem eine Pumpe angetrieben wird, die das Medium (10) in den Treibstofftank (18) presst.

9. Vorrichtung nach einem der Ansprüche 1 bis 8,
bei der der Gasgenerator einen Explansionsmotor und dieser einen Generator zur Erzeugung elektrischen Stroms antreibt.

10. Vorrichtung nach einem der Ansprüche 1 bis 9,
bei der das Medium (10) Wasser ist.

11. Vorrichtung nach einem der vorhergehenden Ansprüche,
bei der der Gasgenerator (1) wiederanzündbar ist, wobei der Anzünder Gas verbrennt.

12. Vorrichtung nach Anspruch 11, bei der der Anzünder mindestens einen festen Treibstoff verbrennt.

13. Vorrichtung nach einem der vorhergehenden Ansprüche,
bei der das aus dem Gasgenerator (1) ausströmende Gas durch einen Injektor (37) mit einem nachgeschaltetem Diffusor (39) geleitet wird, in dem das Gas aus dem Gasgenerator (1) zusammen mit dem Gas aus dem Auftriebstank (18) vermischt wird.

14. Vorrichtung nach Anspruch 9,
bei der die brennbaren Anteile des Gases aus dem Gasgenerator (1) im Bereich des Diffusors (39) verbrennbar sind.

15. Vorrichtung nach einem der Ansprüche 11 oder 12,
bei der das aus dem Gasgenerator (1) ausströmende Gas entweder durch das Gas aus dem Auftriebstank (18) oder durch das die Vorrichtung umgebende Medium kühlbar ist.

## Claims

1. Device for pressurizing a buoyancy tank, comprising a buoyancy tank (18), a propellant tank (8) and a gas generator (1) with a combustion chamber (1a), which can be operated by combustion of a propellant (7),
wherein the device is configured in such a manner that the amount of propellant (7) to be supplied during combustion can be adjusted depending on the pressure, which can be varied in the buoyancy tank (18), and the volume increment to be compensated,
that the amount of propellant (7) to be supplied can be adjusted by means of the propellant tank (8), and
that part of the propellant (7), on which a force can be exerted by a medium (10), can be arranged in the propellant tank (8), and
that the pressure in the combustion chamber (1a) of the gas generator (1) can be adjusted to be higher or at least equal to the pressure in the buoyancy tank (18), and wherein the device is **characterized in that** it is further configured in such a manner
that it has a turbine (15), a gas discharge line (14), a gas discharge line (17) and a bypass with an overflow line (21) and a pressure relief valve (20) such
that the combustion gases released during combustion of the propellant (7) in the combustion chamber (1a) of the gas generator (1a) are conducted to the turbine (15) via the gas discharge line (14),
that the gas generator (1) has a gas outlet opening as an outlet, and the outlet of the gas generator is connected to an inlet of the buoyancy tank (18) via the turbine so that the combustion gases at the outlet of the turbine (15) are conducted into the buoyancy tank (18) via the gas discharge line (17),
that the gas outlet opening of the gas generator (1) is provided with an outlet cross-section controlling means (3),
that the outlet cross-section of the gas generator (1) can be adjusted depending on the pressure prevailing in the buoyancy tank (18),
that the outlet cross-section controlling means (3) is connected to the buoyancy tank (18) via a reference pressure supply means (4), and
that the buoyancy tank (18) is connected to the gas discharge line (14) from the gas generator (1) via a bypass, and
that the bypass comprises the overflow line (21), which is configured in such a manner
that it controls the amount of gas flowing out of or into the buoyancy tank (18) by means of the pressure relief valve (20).

2. Device according to claim 1, in which the amount of propellant (7) to be supplied is adjusted by means of a propellant tank (8).

3. Device according to claim 2, in which the propellant (7) is separated from a membrane (9) or, by means of a bubble, from the medium (10).

4. Device according to claims 1 and 2, in which part of the propellant (7) is contained in an exchangeable cartridge (47), on which the medium (10) exerts pressure.

5. Device according to any of the preceding claims, in which the gas generator (1) is a monopropellant or a dual-propellant gas generator.

6. Device according to any of the preceding claims, wherein the propellant (7) is either a gel-type propellant, a liquid propellant or a propellant sludge.

7. Device according to any of claims 1 to 6, in which either the propellant or the oxidizer is arranged in the form of one or more solid blocks in a combustion chamber, into which a liquid or gaseous oxidizer or propellant can be injected to react with the solid propellant or oxidizer at the surface and to form gas.

8. Device according to any of claims 1 to 7, in which the gas generator drives an expansion motor and the latter drives a generator for generating electric current, by means of which a pump is driven which presses the medium (10) into the propellant tank (18).

9. Device according to any of claims 1 to 8, in which the gas generator drives an expansion motor and the latter drives a generator for generating electric current.

10. Device according to any of claims 1 to 9, in which the medium (10) is water.

11. Device according to any of the preceding claims, in which the gas generator (1) can be reignited, wherein the igniter combusts gas.

12. Device according to claim 11, in which the igniter combusts at least one solid propellant.

13. Device according to any of the preceding claims, in which the gas flowing out of the gas generator (1) is conducted through an injector (37) with a downstream diffuser (39), in which the gas from the gas generator (1) is mixed together with the gas from the buoyancy tank (18).

14. Device according to claim 9, in which the combustible components of the gas from the gas generator (1) can be combusted in the region of the diffuser (39).

15. Device according to any of claims 11 or 12, in which the gas flowing out of the gas generator (1) can be cooled either by the gas from the buoyancy tank (18) or by the medium surrounding the device.

## Revendications

1. Dispositif de mise sous pression d'un réservoir de portance, présentant un réservoir de portance (18), un réservoir de combustible (8) et un générateur de gaz (1) comportant une chambre de combustion (1a), lequel est utilisable par la combustion d'un combustible (7),
le dispositif étant réalisé de telle sorte que la quantité de combustible (7) à fournir lors de la combustion, est réglable en fonction de la pression qui est variable dans le réservoir de portance (18) et en fonction de l'incrément de volume à compenser,
que la quantité de combustible (7) à fournir est réglable par l'intermédiaire du réservoir de combustible (8) et
que dans le réservoir de combustible (8) peut être agencée une partie du combustible (7) sur lequel une force peut être exercée par un médium (10), et
que la pression dans la chambre de combustion (1a) du générateur de gaz (1) est réglable de manière plus élevée ou au moins égale à la pression dans le réservoir de portance (18), et
le dispositif étant **caractérisé en ce qu'**il est en outre réalisé de telle sorte qu'il présente une turbine (15), une conduite d'évacuation de gaz (14),
une conduite d'évacuation de gaz (17) et une dérivation avec une conduite de transfert (21) et une soupape de surpression (20), de telle sorte
**que** les gaz de combustion dégagés lors de la combustion du combustible (7) dans la chambre de combustion (1a) du générateur de gaz (1) sont conduits via la conduite d'évacuation de gaz (14) vers la turbine (15),
**que** le générateur de gaz (1) présente un orifice de sortie de gaz servant d'échappement et l'échappement du générateur de gaz est relié à une entrée du réservoir de portance (18) via la turbine (15), de telle sorte que les gaz de combustion, à la sortie de la turbine (15), sont conduits dans le réservoir de portance (18) via la conduite d'évacuation de gaz (17),
**que** l'orifice de sortie de gaz du générateur de gaz (1) est pourvu d'une régulation de section de sortie (3),
**que** la section de sortie du générateur de gaz (1) est réglable en fonction de la pression prédominante dans le réservoir de portance (18),
**que** la régulation de section de sortie (3) est reliée au réservoir de portance (18) via une alimentation en pression de référence (4), et
**que** le réservoir de portance (18) est relié via une dérivation à la conduite d'évacuation de gaz (14) provenant du générateur de gaz (1) et
**que** la dérivation comprend la conduite de transfert (21) qui est réalisée pour réguler par l'intermédiaire de la soupape de surpression (20) la quantité de gaz s'écoulant hors du réservoir de portance (18) ou dans celui-ci.

2. Dispositif selon la revendication 1, dans lequel le réglage de la quantité de combustible (7) à fournir est effectué via un réservoir de combustible (8).

3. Dispositif selon la revendication 2, dans lequel le combustible (7) est séparé du médium (10) par une membrane (9) ou par l'intermédiaire d'une bulle.

4. Dispositif selon les revendications 1 ou 2, dans lequel une partie du combustible (7) se trouve dans une cartouche (47) interchangeable sur laquelle le médium (10) exerce une pression.

5. Dispositif selon l'une des revendications précédentes, dans lequel le générateur de gaz (1) est un générateur de gaz à un combustible ou deux combustibles.

6. Dispositif selon l'une des revendications précédentes, dans lequel le combustible (7) est soit un combustible en forme de gel, un combustible liquide soit une boue de combustible.

7. Dispositif selon l'une des revendications 1 à 6, dans lequel soit le combustible soit l'oxydant sous forme d'un ou de plusieurs blocs de solides sont agencés dans une chambre de combustion dans laquelle un oxydant ou un combustible liquide ou gazeux peut être injecté pour obtenir une réaction avec le combustible ou l'oxydant solide à la surface et pour la formation de gaz.

8. Dispositif selon l'une des revendications 1 à 7, dans lequel le générateur de gaz entraîne un moteur à expansion et celui-ci un générateur pour engendrer du courant électrique avec lequel est entraînée une pompe qui presse le médium (10) dans le réservoir de combustible (8).

9. Dispositif selon l'une des revendications 1 à 8, dans lequel le générateur de gaz entraîne un moteur à expansion et celui-ci un générateur pour engendrer du courant électrique.

10. Dispositif selon l'une des revendications 1 à 9, dans lequel le médium (10) est de l'eau.

11. Dispositif selon l'une des revendications précédentes, dans lequel le générateur de gaz (1) peut être rallumé, l'allumeur brûlant du gaz.

12. Dispositif selon la revendication 11, dans lequel l'allumeur brûle au moins un combustible solide.

13. Dispositif selon l'une des revendications précédentes, dans lequel le gaz s'écoulant hors du générateur de gaz (1) est conduit à travers un injecteur (37) avec un diffuseur (39) monté en aval dans lequel le gaz provenant du générateur de gaz (1) est mélangé au gaz provenant du réservoir de portance (18).

14. Dispositif selon la revendication 9, dans lequel les parts combustibles du gaz provenant du générateur de gaz (1) peuvent brûler dans la zone du diffuseur (39).

15. Dispositif selon l'une des revendications 11 ou 12, dans lequel le gaz s'écoulant hors du générateur de gaz (1) peut être refroidi soit par le gaz provenant du réservoir de portance (18) soit par le médium entourant le dispositif.
